# EUROPÄISCHE PATENTSCHRIFT

(11) **EP 0 490 020 B1**
(45) Veröffentlichungstag und Bekanntmachung des Hinweises auf die Patenterteilung: **13.04.1994**
(21) Anmeldenummer: 90890322.2
(22) Anmeldetag: 13.12.1990
(51) Int. Cl.: B26D 7/06, B26F 1/38, A41H 43/00

(54) **Werkzeugmaschine, insbesondere Schneidmaschine**
Machine tool, particularly cutting machine
Machine-outil, notamment machine de coupe

(43) Veröffentlichungstag der Anmeldung: 17.06.1992
(73) Patentinhaber: GFM Gesellschaft für Fertigungstechnik und Maschinenbau Aktiengesellschaft, A-4403 Steyr (AT)
(72) Erfinder: Blaimschein, Gottfried, Dipl.-Ing., A-4407 Steyr (AT)
(74) Vertreter: Hübscher, Heiner, Dipl.-Ing.

(56) Entgegenhaltungen:
- DE-A- 3 240 962
- FR-A- 2 567 060
- GB-A- 1 079 470
- GB-A- 2 207 075
- US-A- 3 978 748
- US-A- 4 514 246

## Beschreibung

Die Erfindung bezieht sich auf eine Werkzeugmaschine, insbesondere Schneidmaschine zum Bearbeiten von Flachmaterial, mit einem eine vorzugsweise unterdruckbeaufschlagbare Arbeitsfläche aufweisenden Arbeitstisch und einem der Arbeitsfläche entlang verfahrbaren Werkzeugschlitten, wobei der Arbeitstisch durch einen Legetisch mit einer der Größe nach an die Arbeitsfläche des Arbeitstisches angepaßten Legefläche ergänzt ist und der aus Arbeits- und Legetisch bestehende Maschinentisch zwei Paletten aufnimmt, die zwischen Arbeits- und Legetisch hin- und herschiebbar geführt sind und wechselweise einerseits die Arbeitsfläche des Arbeitstisches, anderseits die Legefläche des Legetisches bilden (siehe z.B. US-A-3 978 748).

Solche Werkzeugmaschinen dienen vor allem zum Ausschneiden von Zuschnitten aus Bandmaterial, beispielsweise Prepregs, zur Oberflächenbearbeitung flacher Werkstücke usw., wobei sich durch den wechselweisen Einsatz der Paletten als Arbeitsfläche einerseits und als Legefläche anderseits gleichzeitig Material bearbeiten und Material auflegen bzw. abnehmen läßt, so daß ein rationeller Arbeitsablauf gewährleistet ist. Trotz dieser Gleichzeitigkeit von Legen und Bearbeiten ist nur ein einziger Arbeitstisch mit den dazugehörigen Saugkästen oder dergleichen Niederhaltern, Werkzeugschlitten u. dgl. erforderlich, welcher Arbeitstisch durch einen einfachen Legetisch zu ergänzen ist, der als Halterung für eine Palette während des Abnehmens und Auflegens dient. Wie die US-A-3 978 748 oder die GB-A-2 207 075 zeigen, ist allerdings bei den bekannten Werkzeugmaschinen der Palettenwechsel an sich recht unbefriedigend und für einen größeren industriellen Einsatz ungeeignet. Die Paletten müssen nämlich entweder händisch hin- und hergeschoben werden, wobei es eine durchgehende Führungsschiene mit einer Ausweiche gibt, was umständlich ist und den Arbeitsablauf verzögert, oder es ist ein hin- und herschiebbarer Palettenschlitten und ein hin- und herschiebbarer Tisch mit heb- und senkbarer Tischplatte vorgesehen, wodurch eigene Antriebe und Steuerungseinrichtungen für den Wechsel erforderlich sind.

Der Erfindung liegt daher die Aufgabe zugrunde, diese Mängel zu beseitigen und eine Werkzeugmaschine der eingangs geschilderten Art zu schaffen, die sich bei verhältnismäßig geringem Konstruktions- und Bauaufwand durch ihre rationelle Arbeitsweise auszeichnet.

Die Erfindung löst diese Aufgabe dadurch, daß dem Maschinentisch legetischseitig eine Materialspendereinrichtung zugehört, daß zwei mit Abstand übereinander dem Maschinentisch entlang verlaufende Palettenführungen vorgesehen sind, die im Bereich des Arbeits- und Legetisches jeweils mit einer Hebevorrichtung zum Heben und Senken der Paletten von der einen Palettenführung zur anderen zusammenwirken, und daß der Werkzeugschlitten und die Paletten einander zugeordnete Kupplungseinrichtungen aufweisen. Die Paletten lassen sich entlang dieser Führungen in unterschiedlichen Höhenlagen unabhängig voneinander verschieben, wobei eine geeignete Hebevorrichtung die Paletten auf den jeweiligen Tisch absetzt bzw. zwischen den beiden Palettenführungen hin- und herbewegt, so daß die Paletten gleichzeitig und praktisch auf direktem Wege verschoben werden können und bei einfacher Konstruktion auch geringe Verschiebezeiten und -wege einzuhalten sind. Als Antrieb für die Palettenverschiebung wird dabei der Werkzeugschlitten selbst herangezogen, der an die Paletten ankuppelbar ist und für die Hin- und Herbewegung der Paletten sorgen kann, was mit wenig Bauaufwand eine Automatisierung des Palettenwechsels erlaubt. Durch eine entsprechend angepaßte Materialspendereinrichtung, die zum Auflegen von ein- und mehrlagigem Material einsetzbar ist, läßt sich dann auch der gesamte Auflege- und Arbeitsvorgang rationalisieren.

Um einen einfachen, robusten Aufbau zu erreichen, stützen sich die Paletten über Laufräder an den Palettenführungen ab, wobei die obere Palettenführung im Bereich der Palettenendlagen oberhalb des Arbeits- und Legetisches, in denen die Hebevorrichtungen mit rollenbestückten Hydraulikzylindern an den Paletten abstützend angreifen, Ausnehmungen für den Durchtritt der seitlich abstehenden Laufräder aufweist. Hier sind die Palettenführungen jeweils einer Verschieberichtung zugeordnet, wobei die Ausnehmungen in den schienenartigen Führungen ein geradliniges Heben und Senken der Paletten ermöglichen. Ist die untere Palettenführung in Tischhöhe vorgesehen, können die Paletten auf der unteren Führung gleich auch ihre Arbeitsfunktion erfüllen, so daß nur eine Hubbewegung zwischen den beiden Führungen erforderlich ist. Wird aus räumlich- konstruktiven Gründen auch die untere Palettenführung oberhalb der Tischhöhe angeordnet, muß auch die untere Palettenführung entsprechende Ausnehmungen aufweisen, um die Paletten dann von dieser auf Tischhöhe absenken zu können. Grundsätzlich spielt es aber keine Rolle und die eine Palettenführung übernimmt die Verschiebebewegung der Paletten in die eine Richtung und die andere Palettenführung die Verschiebebewegung in die andere Richtung.

In einer besonders günstigen Ausgestaltung der Erfindung ist auf dem Maschinentisch ein der Legefläche des Legetisches entlang verfahrbarer Legeschlitten geführt, wobei der Legeschlitten und die Paletten einander zugeordnete Kupplungseinrichtungen aufweisen und die Paletten die Kupplungseinrichtungen für den Legeschlitten an der spenderseitigen und die für den Werkzeugschlitten an der spenderabgewandten Breitseite tragen. Mit diesem Legeschlitten ist nicht nur das Auflegen des Flachmaterials von der Materialspendereinrichtung auf die am Legetisch vorhandene Palette rationell durchführbar, wobei hier Legeschlitten der unterschiedlichsten Bauart eingesetzt werden können, sondern der Legeschlitten kann gemeinsam mit dem Werkzeugschlitten für die Palettenbewegung beim Palettenwechsel mitverwendet werden. Für einen solchen Wechsel werden die beiden Paletten gegengleich mit den beiden Schlitten bis etwa zur Mitte des Verschiebeweges verschoben, dann werden die Paletten von dem einen auf den anderen Schlitten umgekoppelt und die Schlitten nehmen die nun jeweils anderen Paletten wieder mit in die zugehörige Endlage. Damit brauchen die Schlitten nur kürzere Verschiebewege zu durchfahren, was zusammen mit dem Einsatz zweier Schlitten den Palettenwechsel wesentlich beschleunigt.

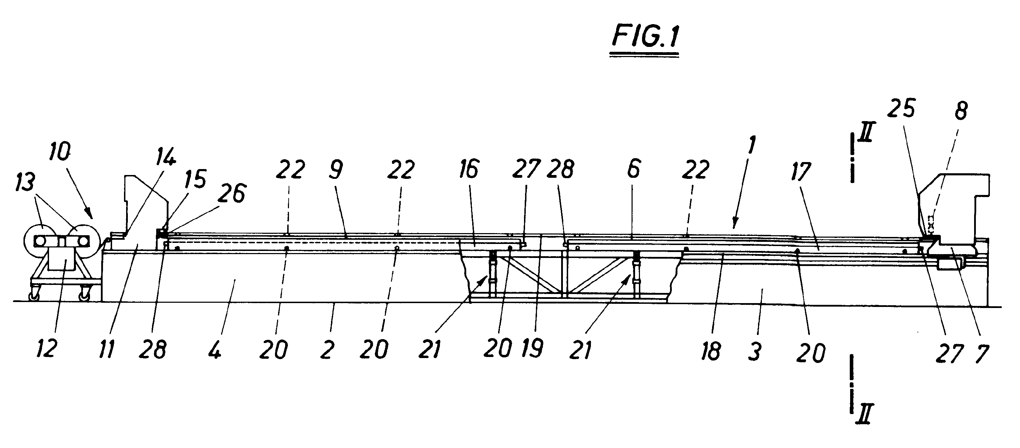

In der Zeichnung ist der Erfindungsgegenstand in einem Ausführungsbeispiel rein schematisch veranschaulicht, und zwar zeigen
- Fig. 1: eine erfindungsgemäße Werkzeugmaschine in teilgeschnittener Seitenansicht,

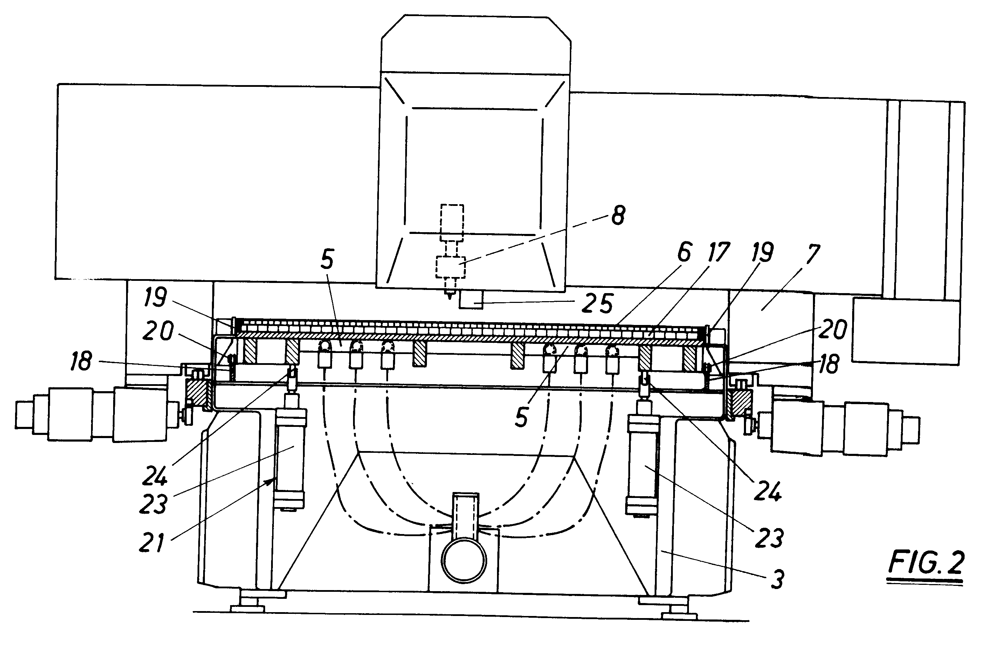

- Fig. 2: einen Querschnitt durch diese Maschine nach der Linie II-II der Fig. 1 und
- Fig. 3a bis 3e: den Palettenwechsel dieser Werkzeugmaschine in mehreren Ablaufphasen.

Eine Werkzeugmaschine (1) zum Bearbeiten von Flachmaterial umfaßt einen Maschinentisch (2), der sich aus einem Arbeitstisch (3) und einem Legetisch (4) zusammensetzt. Der Arbeitstisch (3) bildet eine über Saugkästen (5) unterdruckbeaufschlagbare Arbeitsfläche (6), auf der die zu bearbeitenden Werkstücke während der Bearbeitung mittels eines auf einem der Arbeitsfläche entlang verfahrbaren Werkzeugschlitten (7) aufgebauten Werkzeugaggregates (8), beispielsweise ein Ultraschallmesser, festgehalten werden. Der Legetisch (4) bildet seinerseits eine in der Größe an die Arbeitsfläche (6) angepaßte Legefläche (9), auf die das zu bearbeitende Material aufgelegt bzw. von der das bearbeitete Werkstück abgenommen wird. Dem Legetisch (4) zugeordnet ist eine Materialspendereinrichtung (10), die aus einem der Legefläche (9) entlang verfahrbaren Legeschlitten (11) und einem austauschbaren Rollenmagazin (12), das Rollen mit dem zu bearbeitenden Flachmaterial (13) aufnimmt, besteht. Der Legeschlitten (11) weist eine nur angedeutete Klemmeinrichtung (14) auf, mit der das Flachmaterial endseitig festgeklemmt und zum Auflegen durch Verfahren des Schlittens über die Legefläche gezogen werden kann. Außerdem kann der Legeschlitten (11) gleich mit einer Markierungseinrichtung (15) versehen sein, die die zu bearbeitenden Werkstücke bereits beim Auflegen zu identifizieren erlaubt, und auch andere Einrichtungen, wie Ablängeinrichtungen u.dgl. können auf dem Legeschlitten montiert sein.

Um nun gleichzeitig legen bzw. abnehmen und bearbeiten zu können, nimmt der Maschinentisch (2) zwei Paletten (16, 17) auf, die zwischen Arbeits- und Legetisch (3, 4) hin- und herschiebbar geführt sind und wechselweise einerseits die Arbeitsfläche (6) des Arbeitstisches (3), anderseits die Legefläche (9) des Legetisches (4) bilden. Zur Palettenführung sind zwei mit Abstand übereinander dem Maschinentisch (2) entlang verlaufende Palettenführungen (18, 19) vorgesehen, in denen sich die Paletten jeweils über Laufräder (20) abstützen. Im Bereich der Palettenendlagen oberhalb des Arbeits- und Legetisches (3, 4) sind jeweils Hebevorrichtungen (21) vorgesehen, die die Paletten (16, 17) zwischen den beiden Palettenführungen (18, 19) hin- und herbewegen. Dazu gibt es in der oberen Palettenführung (19) Ausnehmungen (22) für den Durchtritt der seitlich abstehenden Laufräder (20) der Paletten und die Hebevorrichtungen (21) bestehen aus Hydraulikzylindern (23), die mit Stützrollen (24) versehen sind und die Paletten damit beim Heben und Senken abstützen.

Um beim Wechseln der Paletten eigene Antriebe einzusparen, werden der Werkzeugschlitten (7) und der Legeschlitten (11) für die Paletten (16, 17) als Transportgerät eingesetzt, wozu diese Schlitten und die Paletten einander zugeordnete Kupplungseinrichtungen (25, 26) bzw. (27, 28) aufweisen, welche Kupplungseinrichtungen (27, 28) der Paletten (16, 17) an den einander gegenüberliegenden Breitseiten liegen.

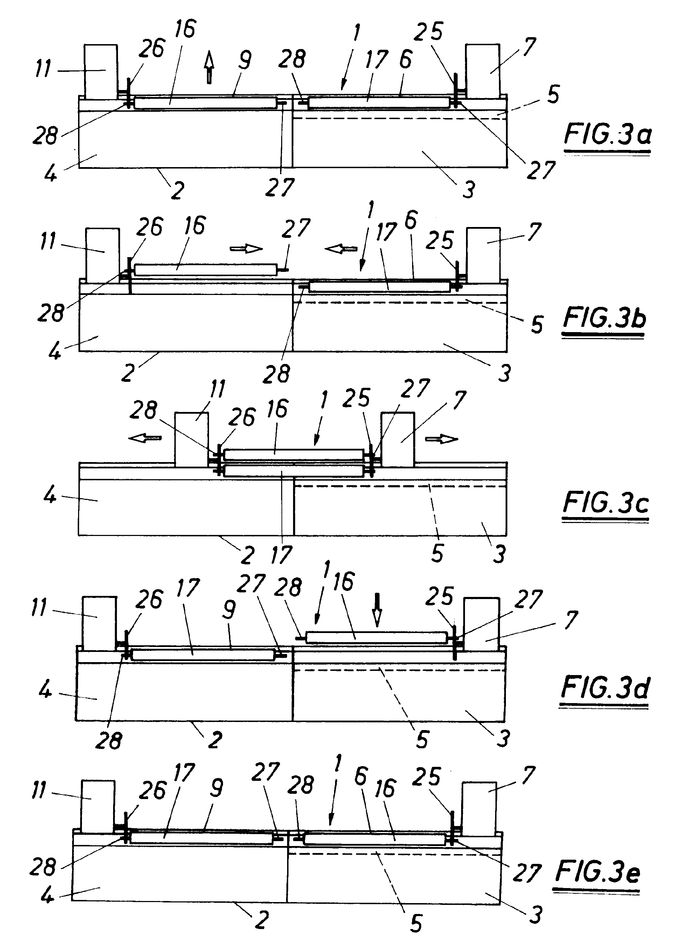

Der Arbeitsablauf dieser Werkzeugmaschine (1) ist in den Fig. 3a bis 3e schematisch veranschaulicht:
Gemäß Fig. 3a liegen die Paletten (16, 17) in ihrer Ausgangsposition einerseits auf dem Legetisch (4) und anderseits auf dem Arbeitstisch (3). Bei Arbeitsbeginn kann nun über den Legeschlitten (11) auf die Palette (16) das zu bearbeitende Flachmaterial wunschgemäß ein- oder mehrlagig aufgebracht werden, wobei es auch möglich ist, unterschiedliche Materiallagen aufeinanderzuschichten. Nun wird die beladene Palette (1) über die Hebevorrichtung (21) von der unteren, in Tischhöhe verlaufenden Palettenführung (18) in die obere Palettenführung (19) gehoben und der Palettenwechsel kann beginnen (Fig. 3b). Dazu sind Legeschlitten (11) und Werkzeugschlitten (7) über die Kupplungseinrichtungen (25, 26) bzw. (27, 28) mit dem zugehörigen Paletten (16, 17) gekuppelt und fahren gleichzeitig gegengleich aufeinander zu, bis sich die Paletten (16, 17) etwa mittig des Verschiebeweges überdecken (Fig. 3c). In dieser Stellung werden die Lege- und Werkzeugschlitten (11, 7) und die Paletten (16, 17) umgekuppelt, so daß nunmehr der Legeschlitten mit der unteren Palette (17) und der Werkzeugschlitten (7) mit der oberen Palette (16) verbunden sind, und die Schlitten fahren zusammen mit diesen Paletten in ihre Ausgangsposition zurück (Fig. 3d). Nun braucht nur mehr die Palette (16) mit dem zu bearbeitenden Flachmaterial auf den Arbeitstisch (3) abgesenkt zu werden, was mittels der Hebevorrichtung (21) erfolgt (Fig. 3e), und die beladene Palette (16) liegt auf dem Arbeitstisch, die leere Palette (17) hingegen auf dem Legetisch. Nun kann das Material auf der Palette (17) mit dem Werkzeugaggregat (8) entsprechend bearbeitet werden, während gleichzeitig auf die leere Palette (17) neues, noch unbearbeitetes Material aufgelegt wird. Ist der Arbeitsablauf beendet, erfolgt wiederum ein Palettenwechsel auf gleiche Weise, wie vorab beschrieben, und wiederum liegt die mit neuem Material beladene Palette auf dem Arbeitstisch und die andere Palette auf dem Legetisch, der nunmehr auch als Abnahmetisch zum Abnehmen des bearbeiteten Materials dient. Sobald die Abnahme beendet ist, kann die Palette wieder frisch belegt werden und der nächste Palettenwechsel erfolgt. Da die Bearbeitungszeit etwa der Summe aus Abnahme- und Legezeit entspricht, ergibt sich praktisch ein verzögerungsfreier Arbeits- und Palettenwechselrhythmus.

Mit vergleichsweise geringem Aufwand läßt sich so eine rationelle Arbeitsweise erreichen, bei der während der eigentlichen Arbeitsphase gleichzeitig das Auflegen bzw. Abnehmen des Flachmaterials und gegebenenfalls auch gleich ein entsprechendes Markieren der Werkstücke erfolgt, ohne daß sich diese aufeinander abzustimmenden Arbeitsschritte gegenseitig beeinträchtigen.

## Patentansprüche

1. Werkzeugmaschine (1), insbesondere Schneidmaschine zum Bearbeiten von Flachmaterial (13), mit einem eine vorzugsweise unterdruckbeaufschlagbare Arbeitsfläche (6) aufweisenden Arbeitstisch (3) und einem der Arbeitsfläche (6) entlang verfahrbaren Werkzeugschlitten (7), wobei der Arbeitstisch (3) durch einen Legetisch (4) mit einer der Größe nach an die Arbeitsfläche (6) des Arbeitstisches (3) angepaßten Legefläche (9) ergänzt ist und der aus Arbeits- und Legetisch (3, 4) bestehende Maschinentisch (2) zwei Paletten (16, 17) aufnimmt, die zwischen Arbeits- und Legetisch (3, 4) hin- und herschiebbar geführt sind und wechselweise einerseits die Arbeitsfläche (6) des Arbeitstisches (3), anderseits die Legefläche (9) des Legetisches (4) bilden, dadurch gekennzeichnet, daß dem Maschinentisch (2) legetischseitig eine Materialspendereinrichtung (10) zugehört, daß zwei mit Abstand übereinander dem Maschinentisch (2) entlang verlaufende Palettenführungen (18, 19) vorgesehen sind, die im Bereich des Arbeits- und Legetisches (3, 4) jeweils mit einer Hebevorrichtung (21) zum Heben und Senken der Paletten (16, 17) von der einen Palettenführung (18; 19) zur anderen (19; 18) zusammenwirken, und daß der Werkzeugschlitten (7) und die Paletten (16, 17) einander zugeordnete Kupplungseinrichtungen (25, 27) aufweisen.

2. Werkzeugmaschine nach Anspruch 1, dadurch gekennzeichnet, daß sich die Paletten (16, 17) über Laufräder (20) an den Palettenführungen (18, 19) abstützen, wobei wenigstens die obere Palettenführung (19) im Bereich der Palettenendlagen oberhalb des Arbeits- und Legetisches (3, 4), in denen die Hebevorrichtungen (21) mit rollenbestückten Hydraulikzylindern (23) an den Paletten (16, 17) abstützend angreifen, Ausnehmungen (22) für den Durchtritt der seitlich abstehenden Laufräder (20) aufweist.

3. Werkzeugmaschine nach Anspruch 1 oder 2, dadurch gekennzeichnet ist, daß auf dem Maschinentisch (2) ein der Legefläche (9) des Legetisches (4) entlang verfahrbarer Legeschlitten (11) geführt ist, wobei der Legeschlitten (11) und die Paletten (16, 17) einander zugeordnete Kupplungseinrichtungen (26, 28) aufweisen und die Paletten (16, 17) die Kupplungseinrichtungen (29) für den Legeschlitten (11) an der spenderseitigen und die Kupplungseinrichtung (27) für den Werkzeugschlitten (7) an der spenderabgewandten Breitseite tragen.

## Claims

1. A machine tool (1) more particularly a cutting machine for machining flat material (13), comprising a work table (3) having a work surface (6), preferably for subjecting to negative pressure, and a tool carriage (7) movable along the work surface (6), the work table (3) being supplemented by a laying table (4) having a laying surface (9) matching the size of the work surface (6) of the work table (3), and the machine table (2) comprising the work table (3) and laying table (4) receiving two pallets (16, 17) which are guided in reciprocation between the work table (3) and the laying table (4) and alternately form the work surface (6) of the work table (3) and the laying surface (9) of the laying table (4), characterised in that a material dispensing device (10) on the side of the laying table is associated with the machine table (2), two spaced-apart pallet guides (18, 19) are provided and extend along the machine table (2) and, in the region of the work table and laying table, each cooperates with a lifting device (21) for lifting and lowering the pallets (16, 17) from one pallet guide (18; 19) to the other (19; 18), and the tool carriage (7) and the pallets (16, 17) have coupling devices (25, 27) associated with one another.

2. A machine tool according to claim 1, characterised in that the pallets (16, 17) rest on the pallet guides (18, 19) via track wheels (20), and at least the upper pallet guide (19) has recesses (22) for the passage of the laterally projecting track wheels (20) in the region of the pallet end positions above the work table (3) and laying table (4) in which the lifting devices (21) have hydraulic cylinders equipped with rollers which bear against and engage the pallets (16, 17).

3. A machine tool according to claim 1 or 2, characterised in that on the machine table (2) a laying carriage (11) is guided for movement along the surface (9) of the laying table (4), and the laying carriage (11) and the pallets (16, 17) have facing coupling devices (26, 28) and the pallets (16, 17) carry the coupling devices (29) for the laying carriage (11) on the wide side near the dispenser and carry the coupling device (27) for the tool carriage (7) on the wide side remote from the dispenser.

## Revendications

1. Machine-outil (1), en particulier machine de coupe pour l'usinage d'un matériau plat (13), avec une table de travail (3) présentant une surface de travail (6) pouvant de préférence être placée sous vide, et un chariot à outil (7), déplaçable le long de la surface de travail (6), la table de travail (3) étant complétée par une table de pose (4) avec une surface de pose (9) dont la taille est adaptée à celle de la surface de travail (6) de la table de travail (3), et la table de machine (2), composée de la table de travail et de la table de pose (3, 4), supportant deux palettes (16, 17), guidées de façon à pouvoir se déplacer dans un sens et dans l'autre, entre la table de travail et la table de pose (3, 4), et formant, alternativement, d'une part, la surface de travail (6) de la table de travail (3), d'autre part, la surface de pose (9) de la table de pose (4),
caractérisé en ce qu'appartient à la table de machine (2), du côté de la table de pose, un dispositif distributeur de matériau (10), en ce que sont prévus deux guidages de palette (18, 19), s'étendant l'un au dessus de l'autre et à distance, le long de la table de machine (2), et coopérant, dans la zone de la table de travail et de la table de pose (3, 4), chaque fois avec un dispositif de levage (21) servant à lever et abaisser les palettes (16, 17), d'un guidage de palette (18; 19) à l'autre (19; 18), et en ce que le chariot à outil (7) et les palettes (16, 17) présentent des dispositifs de couplage (25, 27) associés les uns aux autres.

2. Machine-outil selon la revendication 1,
caractérisée en ce que les palettes (16, 17) prennent appui sur les guidages de palettes (18, 19) par l'intermédiaire de galets de roulement (20), au moins le guidage de palette supérieur (19) présentant, pour le passage des galets de roulement (20) faisant saillie latéralement, des évidements (2) ménagés dans la zone des positions finales des palettes, au-dessus de la table de travail et de pose (3, 4), dans lesquelles les dispositifs de levage (21) agissent, tout en prenant appui, sur les palettes (16, 17), à l'aide de vérins hydrauliques (23) équipés de galets.

3. Machine-outil selon la revendication 1 ou 2,
caractérisée en ce qu'un chariot de pose (11), déplaçable le long de la surface de pose (9) de la table de pose (4) est guidé sur la table de machine (2), le chariot de pose (11) et les palettes (16, 17) présentant des dispositifs de couplage (26, 28) associés les uns aux autres, et les palettes (16, 17) portant les dispositifs de couplage (29) destinés au chariot de pose (11), sur le côté large situé du côté du distributeur, et le dispositif de couplage (27) destiné au chariot à outil (7), sur le côté large situé à l'opposé du distributeur.
